# EUROPÄISCHE PATENTANMELDUNG

(11) **EP 4 454 465 A1**
(43) Veröffentlichungstag der Anmeldung: **30.10.2024**
(21) Anmeldenummer: 24170144.0
(22) Anmeldetag: 15.04.2024
(51) Int. Cl.: A21C 9/04

(54) **QUERVERTEILVORRICHTUNG MIT BEGRENZUNGSPLATTE**

(30) Priorität: 28.04.2023 DE 102023111101
(71) Anmelder: Fritsch Bakery Technologies GmbH & Co. KG, 97348 Markt Einersheim (DE)
(72) Erfinder: Grohmann, Thomas, 97342 Seinsheim (DE)
(74) Vertreter: Grünecker Patent- und Rechtsanwälte PartG mbB

(57) **Zusammenfassung**

Eine Querverteilvorrichtung (8) zum Verteilen von schüttfähigen Lebensmitteln, insbesondere Streugütern (5) zum Berieseln von Teigwaren (4) umfasst einen Trog (18), der an einer Auslassseite (19) eine Öffnung (20) aufweist, und eine Förderbaugruppe (9), die in dem Trog (18) angeordnet und dazu konfiguriert ist, schüttfähiges Lebensmittel in eine erste Richtung (R) und in eine zweite, der ersten Richtung (R) entgegengesetzten Richtung (S) zu fördern. Die Förderbaugruppe (9) einen ersten Drehförderer (10), der zum Fördern des schüttfähigen Lebensmittels in die erste Richtung (R) konfiguriert ist, und einen zweiten Drehförderer (11), der zum Fördern des schüttfähigen Lebensmittels in die zweite Richtung (S) konfiguriert ist, aufweist. Die Querverteilvorrichtung (8) zeichnet sich durch eine Begrenzungsplatte (12) aus, die dazu konfiguriert ist, einen durch den ersten Drehförderer (10) geförderten ersten Förderstrom (24) zu begrenzen.

## Beschreibung

Die Erfindung bezieht sich auf Querverteilvorrichtungen zum Verteilen von Lebensmitteln, insbesondere Streugütern zum Berieseln von Teigwaren, wie sie z. B. in Teigverarbeitungsvorrichtungen, insbesondere Streuvorrichtungen, verwendet werden.

In der EP 3 453 258 A1 wird eine Streuvorrichtung offenbart. Diese umfasst zwei parallel zueinander angeordnete Querförderschnecken. Die Querförderschnecken fördern das Streugut in entgegengesetzte Richtungen, um zu vermeiden, dass sich Ansammlungen von Streugut bilden. Solche Ansammlungen können dazu führen, dass angesammelte Streugut länger dort verbleibt und altert oder gar verdirbt. Die Förderschnecken sind übereinander angeordnet.

Aus der EP 3 622 824 B1 ist ein Sieb bekannt, das einen Vorratsbehälter für Streugut, einen Siebkörper und eine Transporteinrichtung zum Transportieren des Streuguts von dem Vorratsbehälter zu dem Siebkörper umfasst. Der Siebkörper weist einen schleifenförmigen Kanal auf, der zwei parallele Kanäle umfasst, die an ihren Enden durch U-Bögen verbunden sind. Die Transporteinrichtung umfasst zwei Schneckenförderer.

Die DE 10 2020 131 467 A1 offenbart eine Streuvorrichtung mit einer Querverteilvorrichtung, welche zwei Drehförderer umfasst, die in einem Trog angeordnet sind. Die Drehförderer sind koaxial zueinander angeordnet und dazu konfiguriert, schüttfähiges Lebensmittel in entgegensetzte Richtungen zu fördern.

Die unterschiedlichen Anordnungen der verschiedenen Fördereinrichtungen sind für unterschiedliche Anwendungen besser bzw. weniger gut geeignet. Allen Lösungen aus dem Stand der Technik ist jedoch gemein, dass es zu Materialstauungen und dabei zu Komprimierungen der geförderten Lebensmittel kommen kann. Dies ist einerseits nachteilig für die Qualität der geförderten Lebensmittel und kann andererseits zu Fehlfunktionen und/oder Ausfallzeiten der Vorrichtung führen. Diesbezüglich besteht also Optimierungspotenzial.

Es ist eine Aufgabe der Erfindung, eine verbesserte Querverteilvorrichtung anzugeben, die Materialstauungen und Komprimierungen der geförderten Lebensmittel reduzieren kann. Diese Aufgabe wird erfindungsgemäß gelöst durch eine Querverteilvorrichtung mit den Merkmalen des Anspruchs 1.

Es wird eine Querverteilvorrichtung zum Verteilen von schüttfähigen Lebensmitteln, insbesondere Streugütern zum Berieseln von Teigwaren offenbart. Die Querverteilvorrichtung umfasst einen Trog, der an einer Auslassseite eine Öffnung aufweist, und eine Förderbaugruppe, die in dem Trog angeordnet und dazu konfiguriert ist, schüttfähiges Lebensmittel in eine erste Richtung und in eine zweite, der ersten Richtung entgegengesetzten Richtung zu fördern, wobei die Förderbaugruppe einen ersten Drehförderer, der zum Fördern des schüttfähigen Lebensmittels in die erste Richtung konfiguriert ist, und einen zweiten Drehförderer, der zum Fördern des schüttfähigen Lebensmittels in die zweite Richtung konfiguriert ist, aufweist. Die Querverteilvorrichtung zeichnet sich durch eine Begrenzungsplatte aus, die dazu konfiguriert ist, einen durch den ersten Drehförderer geförderten ersten Förderstrom zu begrenzen. Durch die Begrenzungsplatte kann der Förderstrom bspw. derart begrenzt werden, dass stromabwärts der Begrenzungsplatte Stauungen abgebaut werden oder gar nicht erst nicht entstehen.

Als Drehförderer kann eine Vorrichtung angesehen werden, die durch eine Dreh- und/oder Rotationsbewegung ein Schüttgut fördern kann. Vorzugsweise kann ein Drehförderer eine Vorrichtung sein, die dazu konfiguriert ist, durch eine Drehung und/oder Rotation um eine Achse ein Schüttgut, insbesondere schüttfähige Lebensmittel, in einer Richtung zu fördern, die im Wesentlichen parallel zu der Achse orientiert ist. Insbesondere können Förderschnecken als Drehförderer angesehen werden. Als eine Auslassseite kann eine Seite des Trogs angesehen werden, an der das schüttfähige Lebensmittel aus dem Trog heraustritt. Alternativ oder zusätzlich kann es sich um eine Unterseite des Trogs handeln.

Der erste Drehförderer kann eine Förderschnecke umfassen und die Begrenzungsplatte kann vorzugsweise wenigstens teilweise in einem Fördergang der Förderschnecke angeordnet sein. Dadurch kann eine Begrenzung des durch den ersten Drehförderer geförderten Förderstroms auf ein noch kleineres Niveau reduziert werden als bei vollständig außerhalb des Förderganges angeordneten Begrenzungsplatten. Als Förderschnecke kann eine Vorrichtung angesehen werden, die eine oder mehrere schrauben- und/oder helixartig geformte Schneckenflanken zum Fördern von Schüttgut aufweist. Die eine oder mehreren Schneckenflanken können entlang des gesamten Förderwegs der Förderschnecke durchgängig oder an einer oder mehreren Stellen unterbrochen ausgeführt sein. Als Fördergang kann ein Volumen, das zumindest teilweise durch die Schneckenflanke oder Schneckenflanken der Förderschnecke begrenzt wird, angesehen werden. Alternativ oder zusätzlich kann sich die Begrenzungsplatte im Wesentlichen orthogonal zu der ersten Richtung erstrecken.

Die Querverteilvorrichtung kann des Weiteren einen Behälter umfassen, der zum Aufnehmen von schüttfähigem Lebensmittel konfiguriert und mit dem Trog verbunden sein kann. Die Begrenzungsplatte kann an einem Übergang zwischen dem Behälter und dem Trog angeordnet sein. Dadurch kann die Begrenzungsplatte dazu konfiguriert sein, schüttfähiges Lebensmittel in dem Behälter zurückzuhalten. So kann erreicht werden, dass weniger Lebensmittel in die Förderbaugruppe transportiert wird, was das Risiko von Stauungen und/oder Komprimierungen des Lebensmittels vermindern kann. Besonders günstig kann es sein, wenn der erste Drehförderer dazu konfiguriert ist, schüttfähiges Lebensmittel von dem Behälter in den Trog hinein zu fördern. Alternativ oder zusätzlich kann der zweite Drehförderer dazu konfiguriert sein, schüttfähiges Lebensmittel in dem Trog und/oder von dem Trog in Richtung des Behälters, vorzugsweise in den Behälter hinein, zu fördern.

Es kann vorteilhaft sein, wenn die Begrenzungsplatte beweglich und/oder einstellbar ist, sodass ein Ausmaß der Begrenzung des Förderstroms einstellbar sein kann. Bspw. dadurch kann die Querverteilvorrichtung an unterschiedliche Austragsmengen, z. B. einer Streuvorrichtung, welche die Querverteilvorrichtung umfasst, anpassbar sein. Die Austragsmengen der hier beispielhaft genannten Streuvorrichtungen können an unterschiedliche Teigwaren, welche durch sie berieselt werden sollen, und/oder an unterschiedliche Anzahlen von Spuren der zu berieselnden Teigwaren anpassbar sein. Insbesondere in solchen Fällen kann eine Einstellbarkeit des Ausmaßes der Begrenzung des Förderstroms vorteilhaft sein.

Alternativ oder zusätzlich kann die Begrenzungsplatte austauschbar, vorzugsweise werkzeuglos austauschbar, sein. Eine solche Konfiguration kann ähnliche Wirkungen und/oder Vorteile aufweisen, wie die vorstehend beschriebene Beweglichkeit der Begrenzungsplatte. Eine austauschbare und/oder nicht beweglich einstellbare Begrenzungsplatte kann jedoch bei bestimmten Anwendungsfällen bevorzugt sein, bspw. wenn das schüttfähige Lebensmittel einen Bewegungs- bzw. Einstellmechanismus aufgrund seiner Eigenschaften (z. B. Partikelgröße und/oder Adhäsionsneigung) verschmutzen oder blockieren könnte.

Alternativ oder zusätzlich kann der erste Drehförderer einen ersten Förderabschnitt und einen zweiten Förderabschnitt aufweisen. Der erste Förderabschnitt kann dazu konfiguriert sein, schüttfähiges Lebensmittel in der ersten Richtung zu fördern. Der zweite Förderabschnitt kann dazu konfiguriert sein, schüttfähiges Lebensmittel in einer dritten Richtung zu fördern. Vorteilhafterweise kann die dritte Richtung hin zu dem zweiten Drehförderer weisen.

Durch das aktive Fördern des schüttfähigen Lebensmittels in Richtung des zweiten Drehförderers kann vermieden werden, dass sich das Lebensmittel erst staut bevor der zweite Drehförderer es greifen und in die zweite Richtung fördern kann. Bei konventionellen Systemen wird das Lebensmittel üblicherweise durch fortwährendes Fördern aufgestaut bis es mit einem entgegengesetzten Förderer eingreifen und abtransportiert werden kann. Die so bei konventionellen Systemen entstehenden Stauungen können durch die erfindungsgemäße Lösung reduziert oder sogar umgangen werden.

Vorteilhafterweise kann die dritte Richtung quer, vorzugsweise orthogonal, zu der ersten Richtung und/oder der zweiten Richtung orientiert sein. Durch ein Fördern quer, insbesondere orthogonal zu der ersten und/oder zweiten Richtung können Ansammlungen von gefördertem Gut, welche zu Stauungen, Komprimierungen oder Verstopfungen führen können, vermieden oder abgebaut werden. Es ist denkbar, dass der erste Drehförderer um eine erste Drehachse rotierbar ist, und die erste Richtung kann im Wesentlichen parallel zu der ersten Drehachse orientiert sein.

Es kann vorteilhaft sein, wenn der erste Drehförderer mindestens ein Schaufelblech umfasst, das in dem zweiten Förderabschnitt angeordnet sein kann. Das Schaufelblech kann dazu konfiguriert sein, schüttfähiges Lebensmittel in der dritten Richtung zu fördern. Alternativ oder zusätzlich kann das Schaufelblech dazu konfiguriert sein, schüttfähiges Lebensmittel radial zu der ersten Drehachse zu fördern.

Vorteilhafterweise kann der zweite Förderabschnitt weiter von dem Behälter entfernt sein als der erste Förderabschnitt. Alternativ oder zusätzlich kann der zweite Förderabschnitt an einem dem Behälter abgewandten Ende des ersten Drehförderers angeordnet sein. Dadurch kann die Querverteilvorrichtung dazu konfiguriert sein, das schüttfähige Lebensmittel zunächst entlang eines möglichst langen Weges durch den ersten Drehförderer zu fördern, bevor es in Richtung hin zu dem zweiten Drehförderer gefördert wird.

Alternativ oder zusätzlich kann zwischen dem ersten Drehförderer und dem zweiten Drehförderer eine Zwischenwand angeordnet sein. Die Zwischenwand kann wenigstens abschnittsweise durch schüttfähiges Lebensmittel, welches durch den ersten Drehförderer und/oder den zweiten Drehförderer gefördert wird, überströmbar sein. Durch das Überströmen der Zwischenwand kann bei entstehenden Stauungen eine Art Überlauf gewährleistet werden, der Komprimierungen des schüttfähigen Lebensmittels verhindern kann. Im Stand der Technik, insbesondere in der EP 3 622 824 B1 werden häufig verschiedene voneinander getrennte und nach oben hin verschlossene Abschnitte von Förderkanälen vorgeschlagen. Solche konventionellen Systeme sind anfällig für Komprimierungen des geförderten Lebensmittels oder sogar Verstopfungen des Kanals.

Es kann vorteilhaft sein, wenn die Zwischenwand entlang ihrer gesamten Länge durch schüttfähiges Lebensmittel, welches durch den ersten Drehförderer und/oder den zweiten Drehförderer gefördert wird, überströmbar ist. Möglicherweise überschüssiges schüttfähiges Lebensmittel kann so flexibler auf die beiden Drehförderer verteilt werden. Beispielsweise kann bei einer entstehenden Stauung an einer beliebigen Stelle entlang des ersten und/oder zweiten Drehförderers überschüssiges Lebensmittel über die Zwischenwand abfließen.

Eine Höhe der Zwischenwand kann entlang der ersten Richtung und/oder der zweiten Richtung variieren. Denkbar ist sowohl eine zunehmende als auch eine abnehmende Höhe. Zunahme und Abnahme der Höhe können jeweils kontinuierlich oder stufenartig vorgesehen sein. Des Weiteren eine abwechselnd abnehmende und zunehmende Höhe, z. B. eine wellenförmige Oberkante der Zwischenwand. Zunahme und Abnahme der Höhe können auch hier jeweils kontinuierlich oder stufenartig vorgesehen sein. Es kann bevorzugt sein, wenn eine Höhe der Zwischenwand entlang der ersten Richtung und/oder der zweiten Richtung linear abnimmt.

Vorteilhafterweise kann eine Höhe der Zwischenwand an einem von dem Behälter entfernten Ende kleiner sein als an einem dem Behälter zugewandten Ende. Da der Trog an seinem vom Behälter entfernten Ende häufig eine Wand aufweist, kann das Risiko für eine Entstehung von Stauungen, Komprimierungen oder Verstopfung dort erhöht sein. Daher kann es dort besonders günstig sein, wenn eine besonders einfache Ausweichmöglichkeit durch Überströmen gegeben ist.

Die Erfindung bezieht sich auch auf eine Streuvorrichtung für eine Teigbearbeitungsvorrichtung mit einer Querverteilvorrichtung der vorstehend beschriebenen Art. Die Streuvorrichtung kann eine Streuwalze umfassen, die an der Auslassseite des Trogs drehbar angeordnet und dazu konfiguriert sein kann, durch die Öffnung des Trogs hindurchgeförderte Lebensmittel aufzunehmen. Dadurch kann die Streuvorrichtung dazu konfiguriert sein, bspw. Teigwaren gleichmäßig zu berieseln.

Die Erfindung bezieht sich auch auf eine Teigbearbeitungsvorrichtung zum Verarbeiten von Teig, insbesondere zum Erzeugen von Teigwaren, mit einer Streuvorrichtung der vorstehend beschriebenen Art oder einer Querverteilvorrichtung der vorstehend beschriebenen Art und mit einer Fördervorrichtung, die dazu konfiguriert ist, Teigwaren unter der Streuvorrichtung und/oder der Querverteilvorrichtung hindurch zu fördern.

Die Erfindung bezieht sich auch auf eine Querverteilvorrichtung, eine Streuvorrichtung sowie eine Teigbearbeitungsvorrichtung der vorstehend beschriebenen Art. Im Folgenden werden vorteilhafte Ausführungen beispielhaft anhand von Zeichnungen näher erläutert.
Figur 1 zeigt die Teigbearbeitungsvorrichtung gemäß einem Ausführungsbeispiel in einer schematischen Perspektivansicht.
Figur 2 zeigt die Streuvorrichtung gemäß dem in Figur 1 gezeigten Ausführungsbeispiel in einer schematischen Perspektivansicht.
Figur 3 zeigt eine schematische Schnittansicht der Streuvorrichtung aus den Figuren 1 und 2, wobei der Verlauf der Schnittebene in Figur 1 durch die Linie III-III angedeutet ist.
Figur 4 zeigt eine schematische Schnittansicht der Teigbearbeitungsvorrichtung aus den vorhergehenden Figuren, wobei der Verlauf der Schnittebene in Figur 3 durch die Linie IV-IV angedeutet ist.
Figur 5 zeigt eine schematische Schnittansicht der Teigbearbeitungsvorrichtung aus den vorhergehenden Figuren, wobei der Verlauf der Schnittebene in Figur 3 durch die Linie V-V angedeutet ist.

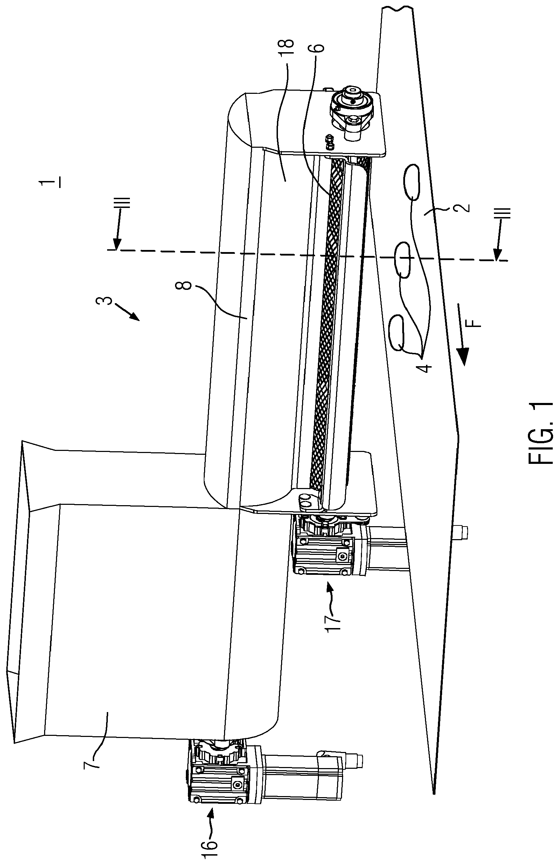

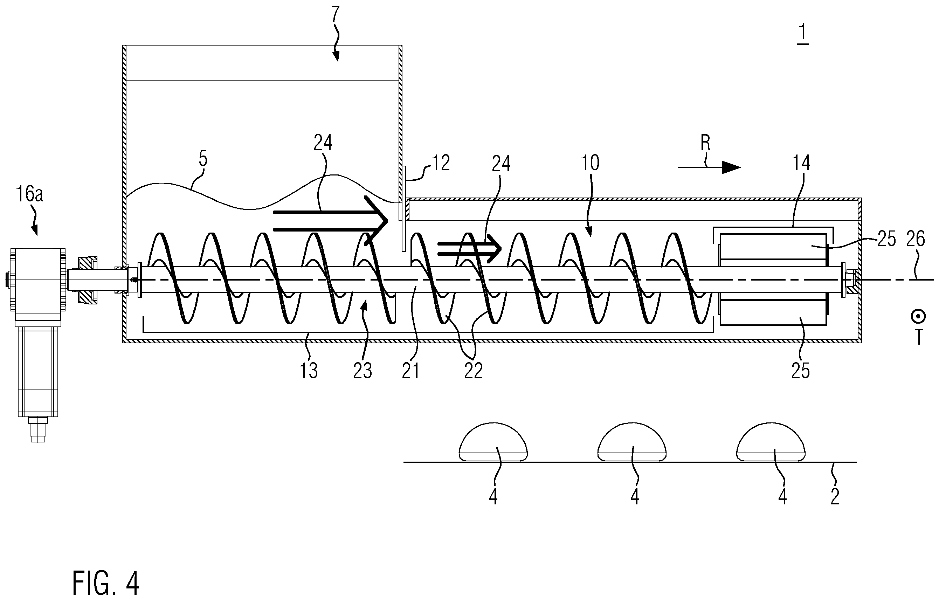

In Figur 1 ist eine Teigbearbeitungsvorrichtung 1 in einer schematischen, perspektivischen Ansicht dargestellt. Es ist zu sehen, dass die Teigbearbeitungsvorrichtung 1 eine Fördervorrichtung 2 umfassen kann. Die Teigbearbeitungsvorrichtung 1 kann des Weiteren eine Streuvorrichtung 3 umfassen. Die Fördervorrichtung 2 kann dazu konfiguriert sein, Teigwaren 4 in einer Förderrichtung F unter der Streuvorrichtung 3 hindurch zu fördern. Die Streuvorrichtung 3 kann dazu konfiguriert sein, die Teigwaren 4 mit einem schüttfähigen Lebensmittel, insbesondere Streugütern 5 (siehe Figur 4), zu bestreuen. Dazu kann die Streuvorrichtung 3 eine Streuwalze 6 aufweisen, deren Funktion später noch genauer erläutert werden wird.

Die Streuvorrichtung 3 kann eine Querverteilvorrichtung 8 umfassen. Die Querverteilvorrichtung 8 kann dazu konfiguriert sein, das Streugut 5 in einer Richtung quer zu einer Förderrichtung F der Fördervorrichtung 2 zu fördern. Dadurch kann das Streugut 5 entlang einer Breite der Fördervorrichtung 2 verteilt werden. Die Querverteilvorrichtung 8 kann einen Behälter 7 umfassen. Der Behälter 7 kann zum Aufnehmen der schüttfähigen Lebensmittel, im vorliegenden Ausführungsbeispiel des Streuguts 5, konfiguriert sein.

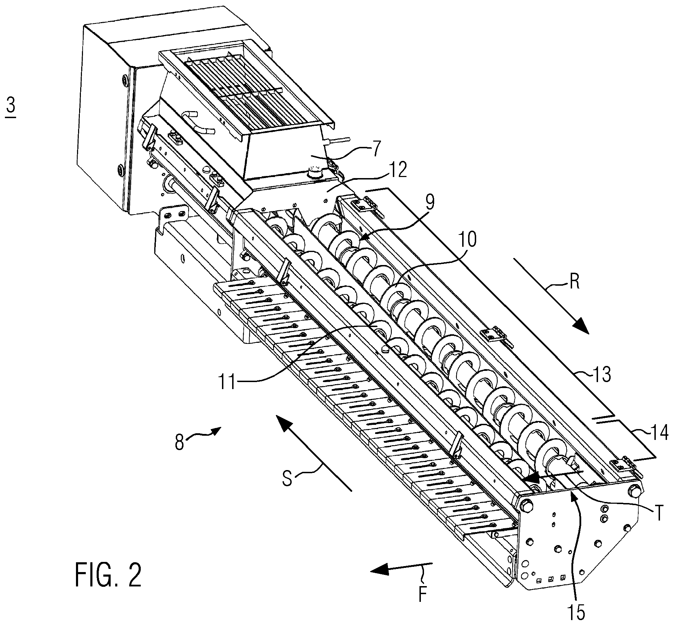

In Figur 2 ist die Streuvorrichtung 3, insbesondere die Querverteilvorrichtung 8, in einer schematischen Perspektivansicht dargestellt, wobei zur besseren Sichtbarkeit Komponenten ausgeblendet sind. Nun ist zu erkennen, dass die Querverteilvorrichtung 8 eine Förderbaugruppe 9 umfassen kann. Die Förderbaugruppe 9 kann dazu konfiguriert sein, das Streugut 5 aus dem Behälter 7 heraus in einer Richtung quer zu der Förderrichtung F der Fördervorrichtung 2 zu fördern. Dadurch kann das Verteilen des Streuguts 5 entlang einer Breite der Fördervorrichtung 2 unterstützt werden. Die Förderbaugruppe 9 kann, wie im dargestellten Ausführungsbeispiel, dazu konfiguriert sein, schüttfähiges Lebensmittel, im vorliegenden Ausführungsbeispiel das Streugut 5, in eine erste Richtung R und in eine zweite Richtung S zu fördern. Dabei kann die zweite Richtung S der ersten Richtung R entgegengesetzt orientiert sein.

Wie im vorliegenden Ausführungsbeispiel kann die Förderbaugruppe 9 einen ersten Drehförderer 10 umfassen, der zum Fördern des schüttfähigen Lebensmittels in die erste Richtung R konfiguriert sein kann. Des Weiteren kann die Förderbaugruppe 9 einen zweiten Drehförderer 11 umfassen, der dazu eingerichtet sein kann, schüttfähiges Lebensmittel in die zweite Richtung S zu fördern.

Die Querverteilvorrichtung 8 kann eine Begrenzungsplatte 12 umfassen, die im Folgenden noch näher erläutert werden wird. Der erste Drehförderer 10 kann einen ersten Förderabschnitt 13 aufweisen. Der erste Förderabschnitt 13 kann dazu konfiguriert sein, schüttfähiges Lebensmittel in der ersten Richtung R zu fördern. Der erste Drehförderer 10 kann außerdem einen zweiten Förderabschnitt 14 aufweisen. Der zweite Förderabschnitt 14 kann dazu konfiguriert sein, schüttfähiges Lebensmittel in einer dritten Richtung T zu fördern. Die dritte Richtung T kann hin zu dem zweiten Drehförderer 11 weisen. Der zweite Förderabschnitt 14 des ersten Drehförderers 10 kann weiter von dem Behälter 7 entfernt sein als der erste Förderabschnitt 13. Wie in Figur 2 gezeigt, kann der zweite Förderabschnitt 14 bevorzugt an einem dem Behälter 7 abgewandten Ende 15 des ersten Drehförderers 10 angeordnet sein.

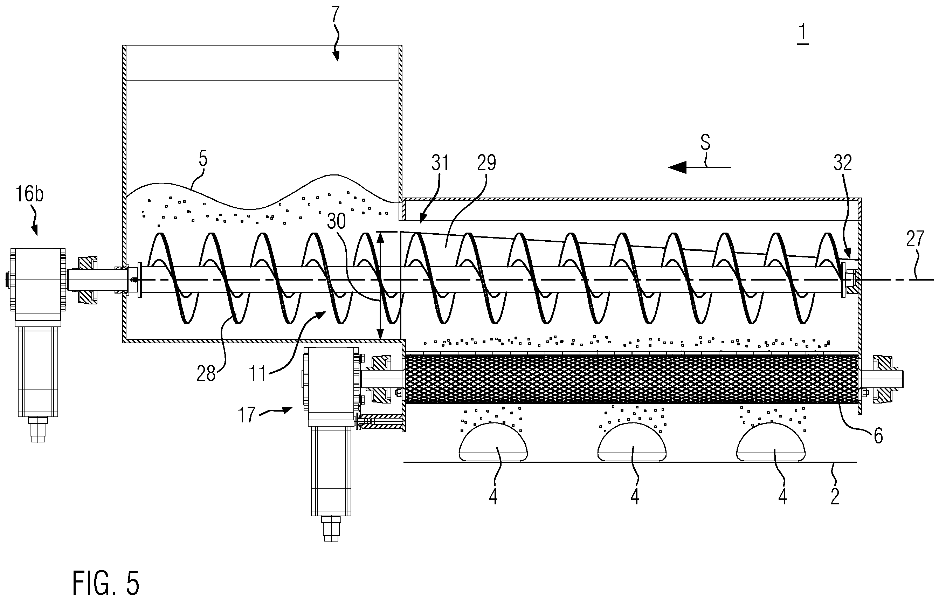

Der erste Drehförderer 10 und der zweite Drehförderer 11 können durch einen Förderantrieb 16 (siehe Figur 1) antreibbar sein. Der Förderantrieb 16 kann ein gemeinsamer Antrieb sein, der dazu konfiguriert ist, den ersten und den zweiten Drehförderer 10, 11 anzutreiben. Es ist jedoch auch denkbar, dass der Förderantrieb 16, wie im vorliegenden Ausführungsbeispiel, dazu konfiguriert ist, den ersten Drehförderer 10 und den zweiten Drehförderer 11 separat, insbesondere unabhängig voneinander, anzutreiben. Bspw. kann der Förderantrieb 16 eine erste Antriebseinheit 16a (siehe Figur 4) und eine zweite Antriebseinheit 16b (siehe Figur 5) umfassen. Die erste Antriebseinheit 16a kann dazu konfiguriert sein, den ersten Drehförderer 10 anzutreiben. Die zweite Antriebseinheit 16b kann dazu konfiguriert sein, den zweiten Drehförderer 11 anzutreiben. In Figur 1 ist darüber hinaus ein Streuwalzenantrieb 17 zu erkennen, der zum Antreiben der Streuwalze 6 vorgesehen sein kann.

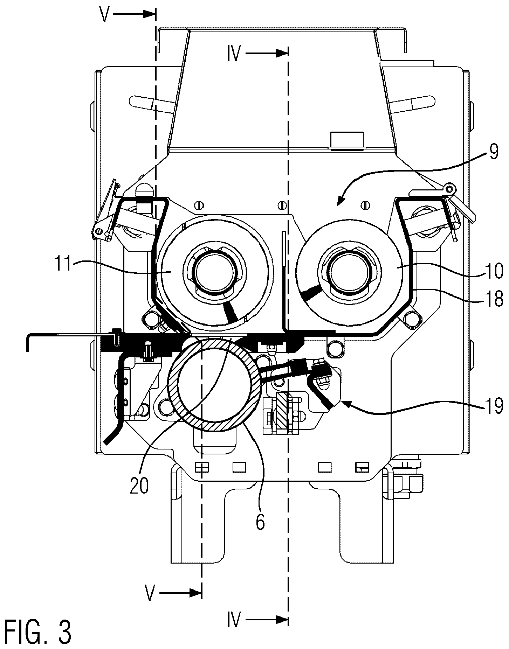

In Figur 3 ist eine schematische Schnittansicht der Streuvorrichtung 3 dargestellt, wobei die Schnittebene in Figur 1 durch die Linie III-III angedeutet ist. Dadurch ist besser zu erkennen, dass die Querverteilvorrichtung 8 einen Trog 18 umfassen kann. Die Förderbaugruppe 9 kann in dem Trog 18 angeordnet sein. Der Trog 18 kann eine Auslassseite 19 aufweisen. An der Auslassseite 19 kann eine Öffnung 20 vorgesehen sein. Die Öffnung 20 kann dazu konfiguriert sein, ein Herausfördern des schüttfähigen Lebensmittels, insbesondere des Streuguts 5, aus dem Trog 18 an der Auslassseite 19 zu ermöglichen. Die Streuwalze 6 kann dazu konfiguriert sein, durch die Öffnung 20 hindurch gefördertes Streugut 5 aufzunehmen. Durch Drehen der Streuwalze 6 können unter der Streuvorrichtung 3 hindurchgeförderte Teigwaren 4 gezielt und/oder gleichmäßig berieselt werden.

In Figur 4 ist eine weitere schematische Schnittansicht der Streuvorrichtung 3 dargestellt, wobei die Schnittebene in Figur 3 durch die Linie IV-IV angedeutet ist. Zu sehen ist der erste Drehförderer 10 mit dem ersten Förderabschnitt 13 und dem zweiten Förderabschnitt 14. Der erste Drehförderer 10 kann um eine erste Drehachse 26 rotierbar sein.

Wie in Figur 4 zu erkennen, kann der erste Drehförderer 10, insbesondere der erste Förderabschnitt 14, eine erste Förderschnecke 21 umfassen. Die erste Förderschnecke 21 kann eine Schneckenflanke 22 umfassen. Zwischen den verschiedenen Abschnitten der Schneckenflanke kann ein Fördergang 23 der Förderschnecke 21 vorgesehen sein. Die Begrenzungsplatte kann teilweise in dem Fördergang 23 angeordnet sein. Die Schneckenflanke 22 kann unterbrochen sein, beispielsweise um ein Hineinragen der Begrenzungsplatte 12 in den Fördergang 23 zu ermöglichen, ohne dass die Begrenzungsplatte 12 mit der Schneckenflanke 22 kollidiert.

Durch Fördern des Streuguts 5 durch den ersten Drehförderer kann ein erster Förderstrom 24 erzeugbar sein. Die Begrenzungsplatte 12 kann dazu konfiguriert sein, einen durch den ersten Drehförderer 10 geförderten Förderstrom zu begrenzen. Wie in Figur 4 dargestellt, kann die Begrenzungsplatte 12 an einem Übergang zwischen dem Behälter 7 und dem Trog 18 angeordnet sein.

Des Weiteren sind in Figur 4 Details des zweiten Förderabschnitts 14 des ersten Drehförderers 10 gemäß dem dargestellten Ausführungsbeispiel zu erkennen. Demnach kann der erste Drehförderer 10 ein oder mehrere Schaufelbleche 25 aufweisen. Das Schaufelblech 25 oder die mehreren Schaufelbleche 25 können in dem zweiten Förderabschnitt 14 angeordnet sein. Das Schaufelblech 25 oder die mehreren Schaufelbleche 25 können dazu konfiguriert sein, das geförderte schüttfähige Lebensmittel, im vorliegenden Ausführungsbeispiel das Streugut 5, in eine Richtung zu schaufeln, die radial zu der ersten Drehachse 26 orientiert ist, insbesondere in die dritte Richtung T.

In Figur 5 ist eine weitere schematische Schnittansicht der Streuvorrichtung 3 dargestellt, wobei die Schnittebene in Figur 3 durch die Linie V-V angedeutet ist. Zu sehen ist der zweite Drehförderer 11. Der zweite Drehförderer 11 kann um eine zweite Drehachse 27 rotierbar sein. Ähnlich dem ersten Drehförderer 10 kann der zweite Drehförderer 11 eine zweite Förderschnecke 28 umfassen. Die zweite Förderschnecke 28 des zweiten Drehförderers 11 kann entlang der gesamten Förderlänge des zweiten Drehförderers 11 vorgesehen sein.

Wie in Figur 5 außerdem zu erkennen, kann die Querfördervorrichtung 8 eine Zwischenwand 29 umfassen. Die Zwischenwand 29 kann zwischen dem ersten Drehförderer 10 und dem zweiten Drehförderer 11 angeordnet sein. Wie im vorliegenden Ausführungsbeispiel kann die Zwischenwand entlang ihrer gesamten Länge durch schüttfähiges Lebensmittel, welches durch den ersten Drehförderer 10 und/oder den zweiten Drehförderer 11 gefördert wird, überströmbar sein. Dies kann durch eine geeignete Höhe 30 der Zwischenwand 29 ermöglicht werden. Wie in Figur 5 beispielhaft gezeigt, kann die Höhe 30 der Zwischenwand 29 entlang der ersten Richtung R und/oder der zweiten Richtung S variieren. Bevorzugt ist die Höhe 30 an einem dem Behälter 7 zugewandten Ende 31 der Zwischenwand 29 größer als an einem dem Behälter 7 abgewandten Ende 32 der Zwischenwand 29. Dies kann bspw., wie in Figur 5 gezeigt durch eine kontinuierlich, z. B. linear, entlang der zweiten Richtung abnehmende Höhe 30 ermöglicht werden.

Der Betrieb der Streuvorrichtung 3 kann wie folgt beschrieben werden. Zunächst kann Streugut 5 in den Vorratsbehälter 7 eingefüllt werden. Das Streugut 5 kann dann zunächst durch den ersten Drehförderer 10, insbesondere durch den ersten Förderabschnitt 13, in der ersten Richtung R aus dem Vorratsbehälter 7 heraus gefördert werden. Dabei kann der erste Förderstrom 24 durch die Begrenzungsplatte 12 begrenzt werden.

In dem zweiten Förderabschnitt 14 des ersten Drehförderers, insbesondere am dem Behälter 7 abgewandten Ende 15 des ersten Drehförderers 10, kann das Streugut 5 in der dritten Richtung T hin zu dem zweiten Drehförderer 11 gefördert werden. Anschließend kann das Streugut 5 durch den zweiten Drehförderer 11 in der zweiten Richtung S gefördert werden, insbesondere zurück in Richtung des Behälters 7. Bei zu großen Ansammlungen von Streugut in einem der Drehförderer 10, 11 kann die Zwischenwand 29 überströmt werden, z. B. um Stauungen zu vermeiden oder zu reduzieren.

Durch die Öffnung 20 kann das Streugut 5 den Trog 18 verlassen und an die Streuwalze 6 übergeben werden, die eine gleichmäßige Berieselung der Teigwaren 4 gewährleisten kann.

## Patentansprüche

1. Querverteilvorrichtung (8) zum Verteilen von schüttfähigen Lebensmitteln, insbesondere Streugütern (5) zum Berieseln von Teigwaren (4), umfassend:
einen Trog (18), der an einer Auslassseite (19) eine Öffnung (20) aufweist, und
eine Förderbaugruppe (9), die in dem Trog (18) angeordnet und dazu konfiguriert ist, schüttfähiges Lebensmittel in eine erste Richtung (R) und in eine zweite, der ersten Richtung (R) entgegengesetzten Richtung (S) zu fördern, wobei die Förderbaugruppe (9) einen ersten Drehförderer (10), der zum Fördern des schüttfähigen Lebensmittels in die erste Richtung (R) konfiguriert ist, und einen zweiten Drehförderer (11), der zum Fördern des schüttfähigen Lebensmittels in die zweite Richtung (S) konfiguriert ist, aufweist,
**gekennzeichnet durch** eine Begrenzungsplatte (12), die dazu konfiguriert ist, einen durch den ersten Drehförderer (10) geförderten ersten Förderstrom (12) zu begrenzen.

2. Querverteilvorrichtung nach Anspruch 1, wobei der erste Drehförderer (10) eine erste Förderschnecke (21) umfasst und die Begrenzungsplatte (12) wenigstens teilweise in einem Fördergang (23) der Förderschnecke angeordnet ist.

3. Querverteilvorrichtung nach einem der vorangehenden Ansprüche, wobei sich die Begrenzungsplatte (12) im Wesentlichen orthogonal zu der ersten Richtung (R) erstreckt.

4. Querverteilvorrichtung nach einem der vorangehenden Ansprüche, des Weiteren umfassend einen Behälter (7), der zum Aufnehmen von schüttfähigem Lebensmittel konfiguriert und mit dem Trog (18) verbunden ist, wobei die Begrenzungsplatte (12) an einem Übergang zwischen dem Behälter (7) und dem Trog (18) angeordnet ist.

5. Querverteilvorrichtung nach Anspruch 4, wobei der erste Drehförderer (10) dazu konfiguriert ist, schüttfähiges Lebensmittel von dem Behälter (7) in den Trog (18) hinein zu fördern.

6. Querverteilvorrichtung nach einem der vorangehenden Ansprüche, wobei die Begrenzungsplatte (12) beweglich ist, sodass ein Ausmaß der Begrenzung des ersten Förderstroms (24) einstellbar ist.

7. Querverteilvorrichtung nach einem der vorangehenden Ansprüche, wobei die Begrenzungsplatte (12) austauschbar, vorzugsweise werkzeuglos austauschbar, ist.

8. Streuvorrichtung (3) für eine Teigbearbeitungsvorrichtung (1) mit einer Querverteilvorrichtung (8) nach einem der vorangehenden Ansprüche.

9. Streuvorrichtung nach Anspruch 8, des Weiteren umfassend eine Streuwalze (6), die an der Auslassseite (19) des Trogs (18) drehbar angeordnet und dazu konfiguriert ist, durch die Öffnung (20) des Trogs (18) hindurchgeförderte Lebensmittel aufzunehmen.

10. Teigbearbeitungsvorrichtung (1) zum Verarbeiten von Teig, insbesondere zum Erzeugen von Teigwaren (4), mit einer Streuvorrichtung (3) gemäß einem der Ansprüche 8 oder 9 oder einer Querverteilvorrichtung (8) gemäß einem der Ansprüche 1 bis 7 und mit einer Fördervorrichtung (2), die dazu konfiguriert ist, Teigwaren (4) unter der Streuvorrichtung (3) und/oder der Querverteilvorrichtung (8) hindurch zu fördern.
